# EUROPEAN PATENT APPLICATION

(11) **EP 4 765 377 A1**
(43) Date of publication of application: **24.06.2026**
(21) Application number: 25738884.3
(22) Date of filing: 06.01.2025
(51) Int. Cl.: H01M 50/141, H01M 50/543, H01M 50/147

(54) **SECONDARY BATTERY**

(30) Priority: 09.01.2024 KR 20240003706; 02.01.2025 KR 20250000526
(71) Applicant: LG Energy Solution, Ltd., Seoul 07335 (KR)
(72) Inventor: LEE, Ji Sun, Daejeon 34122 (KR); KIM, Sang Hun, Daejeon 34122 (KR); YU, Hyung Kyun, Daejeon 34122 (KR); LEE, Jae Ho, Daejeon 34122 (KR); CHOI, Ji Eun, Daejeon 34122 (KR)
(74) Representative: Goddar, Heinz J.
(86) International application number: PCT/KR2025/000227
(87) International publication number: WO 2025/150810

(57) **Abstract**

A secondary battery according to an embodiment of the present disclosure may include an electrode assembly; an outer packaging formed from a sheet such that the outer packaging has an internal space for accommodating the electrode assembly and an outer packaging opening configured to communicate the internal space with an outside; and a cap configured to cover the outer packaging opening. The cap may include a covering portion coupled to the outer packaging; and a terminal portion disposed to cover the outer packaging opening together with the covering portion, wherein the terminal portion is exposed to each of an outside and an inside of the covering portion, and a part of the terminal portion exposed to the inside of the covering portion is electrically connected to the electrode assembly. The terminal portion may include a material having a lower water vapor transmission rate than a material included in the covering portion. An area in which the terminal portion covers the outer packaging opening may be equal to or greater than 90% of an area in which the cap covers the outer packaging opening.

## Description

### TECHNICAL FIELD

### CROSS-REFERENCE TO RELATED APPLICATIONS

The present application claims priority to Korean Patent Application No. 10-2024-0003706 filed on January 9, 2024 and Korean Patent Application No. 10-2025-0000526 filed on January 2, 2025 in the Republic of Korea, the disclosures of which are incorporated herein by reference.

### TECHNICAL FIELD

The present disclosure relates to a secondary battery, and more particularly, to a secondary battery that can be charged and discharged.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies such as solar, wind and tidal energy, and energy storage devices such as batteries for using the produced electrical energy more efficiently are of great interest.

Moreover, with technological development and increasing demand for electronic mobile devices and electric vehicles using batteries, the demand for batteries as an energy source is rapidly increasing, and accordingly many studies are being conducted on batteries that meet a variety of needs.

Batteries that store electrical energy may be generally classified into primary batteries and secondary batteries. Primary batteries are disposable batteries, whereas secondary batteries are rechargeable batteries manufactured using materials that enable repeated oxidation and reduction reactions between electric currents and the materials. That is, when reduction reactions occur in the materials by the electric currents, charging is performed, and when oxidation reactions occur in the materials, discharging is performed, and charging and discharging is repeatedly performed to produce electricity.

Secondary batteries may be classified into cylindrical cells, pouch cells and prismatic cells according to the shape. Among them, a pouch cell may be manufactured by placing an electrode assembly including a positive electrode, a negative electrode and a separator stacked on each other inside a pouch, and sealing the side of the pouch.

The conventional pouch cells have a problem with cracking in pouch films during a forming process of the pouch films, and a majority of pouch films are discarded after a degassing process. In addition, the conventional pouch cells have limited depth for forming due to the material properties of the pouch films, and consequential limited increase in battery capacity.

Accordingly, there is a need for secondary batteries with fewer limitations on shape and improved battery capacity.

### SUMMARY

### TECHNICAL PROBLEM

The present disclosure is directed to providing a secondary battery with fewer limitations on shape, improved battery capacity and less water infiltration.

### TECHNICAL SOLUTION

A secondary battery according to an embodiment of the present disclosure may include an electrode assembly; an outer packaging formed from a sheet such that the outer packaging has an internal space for accommodating the electrode assembly and an outer packaging opening configured to communicate the internal space with an outside; and a cap configured to cover the outer packaging opening. The cap may include a covering portion coupled to the outer packaging; and a terminal portion disposed to cover the outer packaging opening together with the covering portion, wherein the terminal portion is exposed to each of an outside and an inside of the covering portion, and a part of the terminal portion exposed to the inside of the covering portion is electrically connected to the electrode assembly. The terminal portion may include a material having a lower water vapor transmission rate than a material included in the covering portion. An area in which the terminal portion covers the outer packaging opening may be equal to or greater than 90% of an area in which the cap covers the outer packaging opening.

The terminal portion may include an exposure portion having one surface exposed to the outside of the covering portion; and a support portion connected to the exposure portion and having a contact surface facing the covering portion, the contact surface being coupled to an inner surface of the covering portion.

An area of the contact surface may be equal to or greater than 30% of the area in which the terminal portion covers the outer packaging opening.

The area in which the exposure portion covers the outer packaging opening may be equal to or greater than 50% of the area in which the cap covers the outer packaging opening.

A sum of an area in which the exposure portion covers the outer packaging opening and an area of the contact surface in the terminal portion may be equal to or greater than 90% of the area in which the cap covers the outer packaging opening.

The exposure portion may include an outer member having a shape that conforms to a through-hole of the covering portion and exposed to the outside of the covering portion; and a passage member extended from a periphery of the outer member in an inward direction of the covering portion and passing through the through-hole.

The support portion may include a first member connected perpendicularly to the passage member. The contact surface may be included in the first member.

A width of the first member may be equal to or less than a width of the inner surface of the covering portion.

The covering portion may include a resin material having a heat activated adhesive property, and the first member may include a metal material. The inner surface of the covering portion and the first member may be coupled to each other by heat and pressure.

The inner surface of the covering portion and the first member may be coupled to each other by an adhesive applied between the covering portion and the first member.

The support portion may further include a second member extended from the first member toward the electrode assembly and electrically connected to the electrode assembly.

The second member may be coupled to an inner surface of the outer packaging.

The covering portion may include a first cover portion configured to cover the first member from the outside of the covering portion; and a second cover portion disposed between the second member and the outer packaging, coupled to the outer packaging, and extended from the first cover portion toward the electrode assembly.

A surface of the first cover portion facing the first member may be coupled to the contact surface.

### ADVANTAGEOUS EFFECTS

The secondary battery according to an exemplary embodiment of the present disclosure does not need a forming process of the outer packaging, and thus has fewer limitations on the shape in which the outer packaging accommodates the electrode assembly, a low likelihood that defects such as cracks will occur in the outer packaging, and improved battery capacity.

In addition, it may be possible to reduce water infiltration into the secondary battery from the outside, thereby improving safety of the secondary battery.

Specifically, it may be possible to prevent corrosion caused by water infiltration with increasing duration of use of the secondary battery, thereby maintaining the performance of the secondary battery.

In addition, it may be possible to improve structural stability of the secondary battery by the connection relationship and placement of the terminal portion and the covering portion.

In addition, it may be possible to efficiently maintain sealability of the terminal portion and the covering portion.

The effects according to the present disclosure are not limited by the disclosure, and these and other effects are included in the specification.

### BRIEF DESCRIPTION OF THE DRAWINGS

FIG. 1 is a perspective view schematically showing a secondary battery according to Embodiment 1 of the present disclosure.
FIG. 2 is an exploded perspective view schematically showing a secondary battery according to Embodiment 1 of the present disclosure.
FIG. 3 is an exploded perspective view schematically showing a cap of a secondary battery according to Embodiment 1 of the present disclosure.
FIG. 4 is a cross-sectional view schematically showing a part of a cross section of a secondary battery according to Embodiment 1 of the present disclosure, taken along the line A-A' of FIG. 1.
FIG. 5 is an exploded perspective view schematically showing a secondary battery according to Embodiment 2 of the present disclosure.
FIG. 6 is an exploded perspective view schematically showing a cap of a secondary battery according to Embodiment 2 of the present disclosure.
FIG. 7 is a cross-sectional view schematically showing parts of a cap and an outer packaging of a secondary battery according to Embodiment 2 of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, irrelevant description and a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, and rather, should be interpreted based on the meanings and concepts corresponding to the technical aspect of the present disclosure on the basis of the principle that the inventor is allowed to define the terms appropriately for the best explanation.

### Embodiment 1

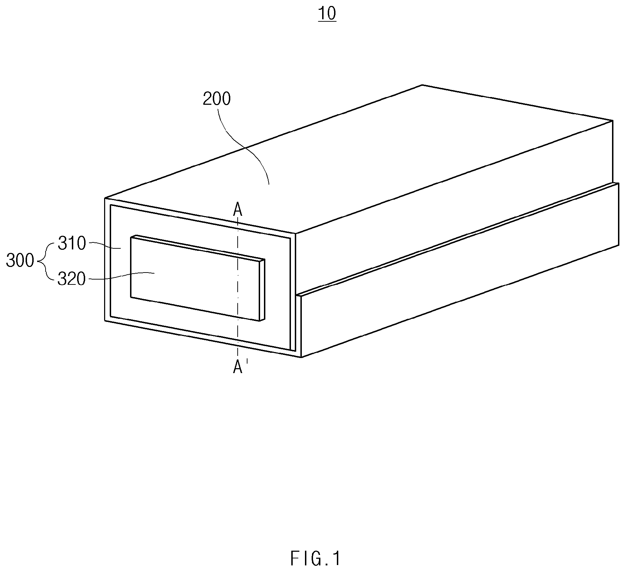

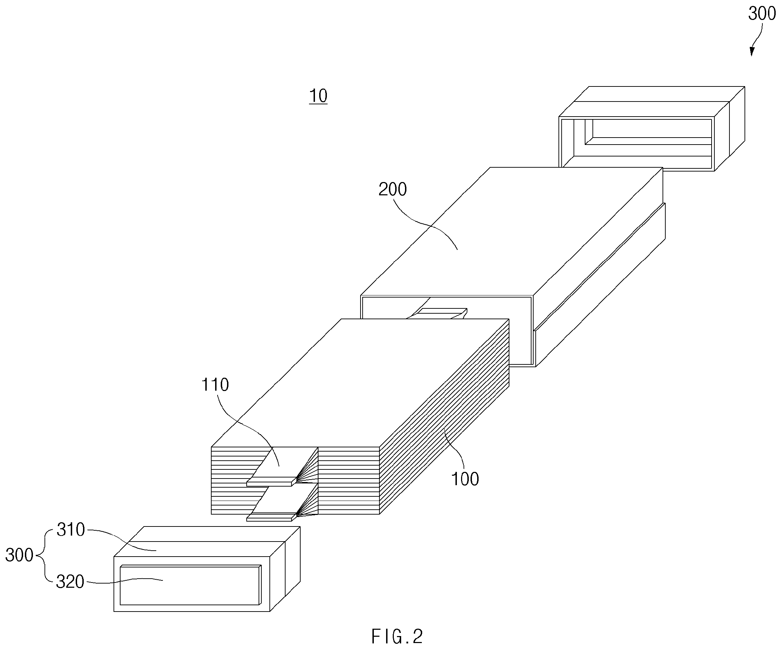

FIG. 1 is a perspective view schematically showing a secondary battery 10 according to Embodiment 1 of the present disclosure, and FIG. 2 is an exploded perspective view schematically showing the secondary battery 10 according to Embodiment 1 of the present disclosure.

The secondary battery 10 according to Embodiment 1 of the present disclosure may include an electrode assembly 100, an outer packaging 200 and a cap 300. Hereinafter, each component of the secondary battery 10 will be described in more detail. For reference, the description of Embodiment 1 may be equally applied to the following embodiment as long as there are no conflicting descriptions.

The electrode assembly 100 of the secondary battery 10 may include a positive electrode, a negative electrode and a separator. Here, the separator may be interposed between the positive electrode and the negative electrode to physically separate the positive electrode from the negative electrode. The electrode assembly 100 may include a stack type in which the positive electrode, the negative electrode and the separator are stacked, or a jelly-roll type in which the positive electrode, the negative electrode and the separator are wound.

The electrode assembly 100 may have an electrode tab 110 connected to the electrode. The electrode tab 110 may be provided separately or may be provided as a part of a current collector that constitutes the electrode. For reference, when the electrode assembly 100 is in the form of an all-solid-state battery, the separator may be replaced with a solid electrolyte.

Referring to FIG. 2, the secondary battery 10 according to Embodiment 1 of the present disclosure may include the outer packaging 200. The outer packaging 200 of the secondary battery 10 may be configured to cover a part of the electrode assembly 100. Specifically, the outer packaging 200 may be configured to cover the electrode assembly 100 and the cap 300 as described below. More specifically, the outer packaging 200 may be coupled to the cap 300 to form an internal space, and the electrode assembly 100 may be housed in the internal space.

The outer packaging 200 of the secondary battery 10 may have a shape in which a sheet or a film is rolled along the side of the electrode assembly 100. That is, the outer packaging 200 may be disposed around the side of the electrode assembly 100. In this instance, the outer packaging 200 may be disposed around the electrode assembly 100 such that one end and the other end thereof meet each other.

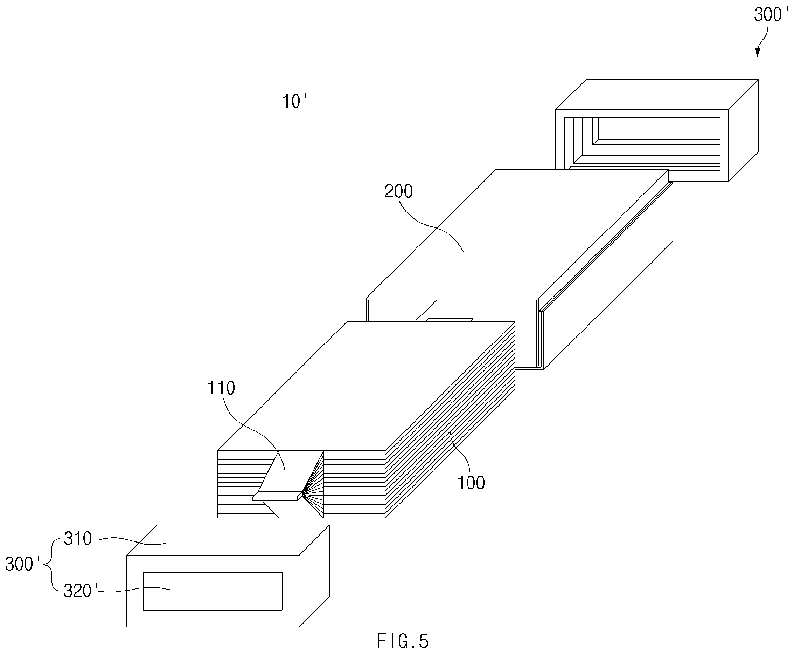

With regard to the shape in which one end and the other end of the outer packaging 200 meet each other, one surface of one end and the other surface of the other end may be coupled in contact with each other (see FIG. 2), and one surface of one end and one surface of the other end may be coupled in contact with each other (see FIG. 5). This is provided as an example, and one end and the other end of the outer packaging 200 may be coupled in various shapes to form the space for accommodating the electrode assembly 100.

With regard to the coupling method of the one end and the other end of the outer packaging 200, the one end and the other end of the outer packaging 200 may be coupled to each other by heat sealing or by sealing using heat and pressure. That is, the outer packaging 200 may include a material having heat activated sealability. Specifically, the outer packaging 200 may include a material having an adhesive property when it melts by heat. For example, the outer packaging 200 may include at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon and glass fiber. Usually, a polyolefin-based resin such as polypropylene (PP) or polyethylene (PE) may be used. In particular, polypropylene (PP) may have good mechanical properties such as tensile strength, rigidity, surface hardness, wear resistance and heat resistance and good chemical properties such as corrosion resistance.

The outer packaging 200 may cover a part of the electrode assembly 100, and the cap 300 may cover the remaining part of the electrode assembly 100. Specifically, when the outer packaging 200 is disposed around the electrode assembly 100 along the side of the electrode assembly 100, outer packaging openings may be formed at two ends of the electrode assembly 100. The cap 300 of the secondary battery 10 may be coupled to the outer packaging 200 to cover the outer packaging openings at the two ends of the electrode assembly 100, and the electrode assembly 100 may be housed in the internal space formed by the outer packaging 200 and the cap 300. That is, the cap 300 may be disposed to cover the outer packaging openings.

As an example of the coupling method of the cap 300 and the outer packaging 200, the cap 300 and the outer packaging 200 may be coupled by welding. Specifically, the covering portion 310 may include a metal material, and the outer packaging 200 may include a metal layer that may be coupled to the covering portion 310 by welding at an area of contact with the covering portion 310.

As another example of the coupling method of the cap 300 and the outer packaging 200, the cap 300 and the outer packaging 200 may be coupled by sealing. Specifically, the covering portion 310 may include a resin material having a heat activated adhesive property, and the outer packaging 200 may include a resin layer that may be coupled to the covering portion 310 by heat and pressure at the area of contact with the covering portion 310. Here, the resin layer may include the above-described material having heat sealability.

The conventional pouch cell has a cup portion for accommodating the electrode assembly 100, and the cup portion is formed by forming a sheet or a film. In the forming process of the cup portion, the material properties of the sheet or film place limitations on the depth for forming, and on the capacity for accommodating the electrode assembly 100 as well. In addition, when forming the sheet or film, defects such as cracks often occur at the corner where the thickness is reduced the most. Moreover, the conventional pouch cell needs a gas collection portion for collecting gas in the degassing process for removing gas accumulated in the pouch, and after the degassing process, the gas collection portion is removed, so lots of parts are discarded.

In contrast, the secondary battery 10 according to Embodiment 1 of the present disclosure may adapt the outer packaging 200 to the volume of the electrode assembly 100, so there may be no limitations on the accommodation capacity for the electrode assembly 100. In addition, it is possible to eliminate the need for cup portion forming, thereby preventing defects such as cracks in the outer packaging 200, and the material and thickness of the outer packaging 200 may be selected relatively freely. Furthermore, electrolyte injection and degassing may be performed through the cap 300, thereby reducing the waste of the outer packaging 200, and improving the economic efficiency of the process.

Although not described in detail, the cap 300 may further include an electrolyte solution inlet for injecting an electrolyte solution or a gas vent for releasing gas to the atmosphere in the degassing process.

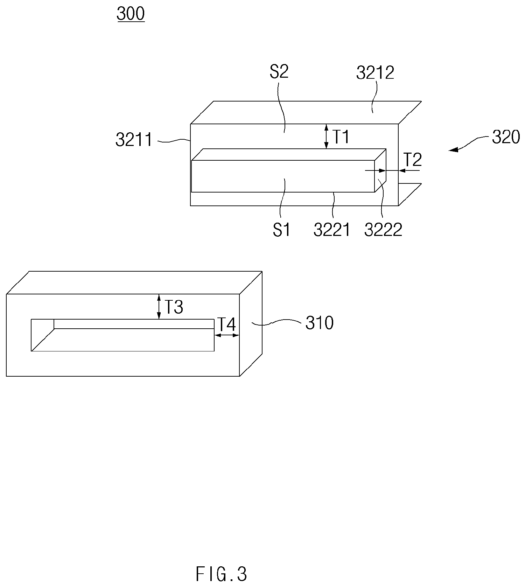

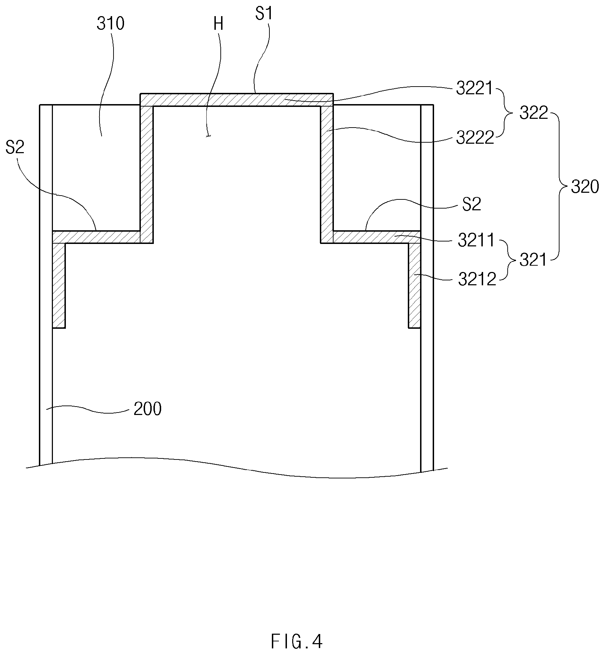

FIG. 3 is an exploded perspective view schematically showing the cap 300 of the secondary battery 10 according to Embodiment 1 of the present disclosure, and FIG. 4 is a cross-sectional view schematically showing a part of a cross section of the secondary battery 10 according to Embodiment 1 of the present disclosure, taken along the line A-A' of FIG. 1.

Referring to FIGS. 3 and 4, the cap 300 of the secondary battery 10 according to Embodiment 1 of the present disclosure may include the covering portion 310 and a terminal portion 320.

The covering portion 310 of the cap 300 may be coupled to the outer packaging 200. In addition, the terminal portion 320 of the cap 300 may be coupled to the covering portion 310 and exposed to each of the inside and outside of the covering portion 310. Here, the inside of the covering portion 310 may refer to a part of the internal space formed by the cap 300 and the outer packaging 200, and the outside of the covering portion 310 may refer to a space outside of the cap 300 and the outer packaging 200. A part of the terminal portion 320 exposed to the inside of the covering portion 310 may be electrically connected to the electrode assembly 100. In this instance, the electrical connection may include a direct connection between the terminal portion 320 and the electrode assembly 100 and an indirect connection through the medium of an electrically conductive member.

As an example of a configuration for improving structural stability of the cap 300, movement of the terminal portion 320 of the cap 300 according to Embodiment 1 of the present disclosure in a direction away from the electrode assembly 100 may be restricted by the covering portion 310. In relation to this, the terminal portion 320 of the cap 300 may include an exposure portion 322 and a support portion 321.

The exposure portion 322 of the terminal portion 320 may be exposed to the outside of the covering portion 310. Accordingly, the terminal portion 320 electrically connected to the electrode assembly 100 may have electrical contact with the outside through the exposure portion 322 exposed to the outside of the covering portion 310. That is, the secondary battery 10 may provide electrical energy to the outside through the exposure portion 322.

Referring to FIG. 4, the exposure portion 322 of the terminal portion 320 may include an outer member 3221 and a passage member 3222.

The outer member 3221 of the exposure portion 322 may be exposed to the outside of the covering portion 310. That is, one surface S1 of the exposure portion 322 may protruded from one surface of the covering portion 310 in a direction away from the electrode assembly 100 (upward direction in FIG. 4). Alternatively, one surface S1 of the exposure portion 322 may be located on the same plane as one surface of the covering portion 310. Here, one surface S1 of the exposure portion 322 may be an outermost surface of the exposure portion 322 facing the outside of the covering portion 310.

On the basis of FIG. 4, one surface S1 of the exposure portion 322 may be an upper surface of the exposure portion 322, and one surface of the covering portion 310 may be an upper surface of the covering portion 310.

With regard to the specific shape of the outer member 3221, the covering portion 310 may have a through-hole H for connection between the exposure portion 322 and the support portion 321.

The outer member 3221 may be formed in a shape that conforms to the through-hole H of the covering portion 310. Accordingly, the outer member 3221 may protrude outward through the through-hole H or may be disposed in the through-hole H. That is, this shape may allow for insertion of the outer member 3221 into the through-hole H in a direction from the inside of the covering portion 310 to the outside of the covering portion 310 (upward direction in FIG. 4).

The passage member 3222 of the exposure portion 322 may be extended from the periphery of the outer member 3221 in an inward direction of the covering portion 310 (downward direction in FIG. 4) and pass through the through-hole. Preferably, the passage member 3222 may be formed along the periphery of the outer member 3221.

The passage member 3222 may define the perimeter of the exposure portion 322. The outer perimeter of the passage member 3222 may be in contact with or adjacent to the inner perimeter of the through-hole H. Accordingly, the terminal portion 320 and the covering portion 310 may be stably coupled to each other.

The support portion 321 of the terminal portion 320 may be connected to the exposure portion 322 and supported by the covering portion 310 at the inside of the covering portion 310 to prevent separation of the exposure portion 322 from the covering portion 310. Specifically, a contact surface S2 of the support portion 321 facing the covering portion 310 may be coupled to the inner surface of the covering portion 310.

With respect to a direction parallel to the penetration direction of the through-hole H, the support portion 321 may overlap the covering portion 310. Accordingly, the support portion 321 may be held against the covering portion 310 to prevent separation of the terminal portion 320 from the covering portion 310. That is, the support portion 321 may be supported by the covering portion 310. In addition, the contact surface S2 of the support portion 321 may be coupled to the inner surface of the covering portion 310. Accordingly, structural stability of the cap 300 may be improved. In addition, sealability of the covering portion 310 and the terminal portion 320 may be improved.

As an example of a configuration for preventing water infiltration into the inside from the outside of the cap 300, a ratio between an area in which the terminal portion 320 according to Embodiment 1 of the present disclosure covers the outer packaging opening and an area in which the cap 300 covers the outer packaging opening may be determined. Here, the area in which the cap 300 covers the outer packaging opening may refer to an area in which the cap 300 projects in the open direction of the outer packaging 200. Likewise, the area in which the terminal portion 320 covers the outer packaging opening may refer to an area in which the terminal portion 320 projects in the open direction of the outer packaging 200. More specifically, the area in which the terminal portion 320 covers the outer packaging opening may refer to the sum of the area of one surface S1 of the exposure portion 322 and the area of the contact surface S2. Hereinafter, for convenience of understanding, the area in which the terminal portion 320 covers the outer packaging opening is indicated by 'S1 + S2'.

The area S1 + S2 in which the terminal portion 320 covers the outer packaging opening may be equal to or greater than 90% of the area in which the cap 300 covers the outer packaging opening.

Hereinafter, a method for calculating the area ratio of the terminal portion 320 and the cap 300 will be described in detail.

Water vapor transmission rate (WVTR) may refer to a value obtained by dividing the amount of water infiltration (g) by the multiplication of area (m²) and time (h). Hydrogen fluoride (HF) may be produced in the secondary battery 10 due to water infiltrated into the secondary battery 10. The HF may cause corrosion in the internal components of the secondary battery 10. When the concentration of HF produced in the secondary battery 10 after the duration of use of 10 years at room temperature is 10,000 ppm or more, there is a risk of corrosion in the internal components of the secondary battery 10. Accordingly, the area in which the terminal portion 320 covers the outer packaging opening may be set such that the concentration of HF is below 10,000 ppm. Because the amount of water infiltration may be calculated through the HF concentration, the area in which the terminal portion 320 covers the outer packaging opening may be determined through the water vapor transmission rate. As a result of the calculation by this method, the area in which the terminal portion 320 covers the outer packaging opening may be equal to or greater than 90% of the area in which the cap 300 covers the outer packaging opening, in order to prevent corrosion in the secondary battery 10.

The terminal portion 320 may include a material having a lower water vapor transmission rate than the material from which the covering portion 310 is made. Specifically, the terminal portion 320 may be made of a material having a lower water vapor transmission rate than the material of which the covering portion 310 is made. Accordingly, when the covering portion 310 and the terminal portion 320 cover the electrode assembly 100 together, it may be possible to reduce the amount of water infiltrated into the space in which the electrode assembly 100 is housed, compared to when only the covering portion 310 covers the electrode assembly 100. Preferably, the terminal portion 320 may be made of a metal.

Considering water infiltration prevention and structural stability, the area in which the exposure portion 322 covers the outer packaging opening may be equal to or greater than 50% of the area in which the cap 300 covers the outer packaging opening. Specifically, the area of one surface S1 of the exposure portion 322 may be equal to or greater than 50% of the area in which the cap 300 covers the outer packaging opening. That is, the area in which the outer member 3221 covers the outer packaging opening may be equal to or greater than 50% of the area in which the cap 300 covers the outer packaging opening.

With regard to the shape of the support portion 321 supported by the covering portion 310, the support portion 321 may include a first member 3211 and a second member 3212.

The first member 3211 of the support portion 321 may extend from the passage member 3222 in a direction (left-right direction in FIG. 4) orthogonal to the extension direction of the passage member 3222 (top-bottom direction in FIG. 4). That is, the first member 3211 may be connected to the passage member 3222 and formed perpendicular to the passage member 3222.

In this instance, the first member 3211 may be held against the inner surface of the covering portion 310. On the basis of FIG. 4, the inner surface of the covering portion 310 may refer to a lower surface of the covering portion 310.

Additionally, the first member 3211 of the support portion 321 may include the contact surface S2. Specifically, one surface of the first member 3211 may be the contact surface S2. As described above, the contact surface S2 may be coupled to the covering portion 310.

The area of the contact surface S2 may be equal to or greater than 30% of the area S1 + S2 in which the terminal portion 320 covers the outer packaging opening. Accordingly, it may be possible to ensure sufficient sealability between the covering portion 310 and the terminal portion 320.

As an example of a configuration for ensuring sealability between the covering portion 310 and the terminal portion 320, the first member 3211 may extend from the passage member 3222 toward the outer packaging 200. Here, a width in which the first member 3211 is extended may be equal to or smaller than a width of the inner surface of the covering portion 310. That is, the width T1, T2 of the contact surface S2 may be equal to or smaller than the width T3, T4 of the inner surface of the covering portion 310 (see FIG. 3). Accordingly, the area of the contact surface S2 may be equal to or smaller than the area of the inner surface of the covering portion 310.

In this instance, the extension width T1 of the first member 3211 connected to the second member 3212 and the extension width T2 of the first member 3211 not connected to the second member 3212 may be different. However, the extension width T1, T2 of the first member 3211 may be equal to or less than the width T3, T4 of the inner surface of the covering portion 310, respectively. For reference, FIG. 4 shows that the extension width T1, T2 of the first member 3211 is equal to the width T3, T4 of the inner surface of the covering portion 310.

An example of the coupling method of the covering portion 310 and the first member 3211 may include coupling by sealing. The first member 3211 may include a metal material, and the covering portion 310 may include a resin material having a heat activated adhesive property. Accordingly, the resin material of the covering portion 310 having a heat activated adhesive property may be coupled to the first member 3211 by pressure when it melts.

As another example of the coupling method of the covering portion 310 and the first member 3211, the inner surface of the covering portion 310 and the first member 3211 may be coupled to each other by an adhesive applied between the covering portion 310 and the first member 3211. Here, one surface of the first member 3211 coupled to the inner surface of the covering portion 310 may be the contact surface S2.

The second member 3212 of the support portion 321 may extend from the first member 3211 toward the electrode assembly 100, and one end may be electrically connected to the electrode assembly 100. In this instance, the second member 3212 may include a plurality of second members. That is, the support portion 321 may be electrically connected to the electrode assembly 100 at a plurality of locations. Accordingly, when the secondary battery 10 includes a plurality of electrode assemblies 100, each of the plurality of electrode assemblies 100 may be electrically connected to each second member 3212 located close to it. Through this, the secondary battery 10 may efficiently increase the battery capacity.

For example, the second member 3212 of the support portion 321 may include a pair of second members connected to two opposite edges of the first member 3211, respectively (see FIG. 3). That is, the second members 3212 may be connected to upper and lower edges of the first member 3211 on the basis of FIG. 3. In this instance, the second members 3212 extended from the top and bottom of the first member 3211 may be connected to two electrode tabs 110 located at upper and lower positions, respectively.

However, this is provided as an example, and as another example, the second member 3212 of the support portion 321 may be formed along the periphery of the first member 3211. That is, the second member 3212 may be connected to all edges of the first member 3211.

The second member 3212 may be coupled to the outer packaging 200. More specifically, the second member 3212 may be coupled to the inner surface of the outer packaging 200. Accordingly, it may be possible to increase the water infiltration paths between the support portion 321 and the outer packaging 200 and reduce the amount of water infiltration.

Specifically, the second member 3212 may include a metal material, and the outer packaging 200 may include a resin layer having a heat activated adhesive property at the area of contact with the second member 3212. Accordingly, the second member 3212 and the outer packaging 200 may be coupled by sealing using heat and pressure.

The cap 300 of the secondary battery 10 according to Embodiment 1 of the present disclosure may cover the electrode assembly 100 with the covering portion 310 and the terminal portion 320. Depending on the material of the covering portion 310, water may infiltrate into the covering portion 310 from the outside of the covering portion 310. The water infiltration may cause defects in the secondary battery 10. As the cap 300 of the secondary battery 10 according to Embodiment 1 of the present disclosure covers the electrode assembly 100 with the covering portion 310 and the terminal portion 320 made of metal together, it may be possible to reduce the area of the covering portion 310 into which water infiltrates. In addition, as the support portion 321 is supported by the covering portion 310, water infiltration paths between the support portion 321 and the covering portion 310 may be increased. Furthermore, as the support portion 321 is coupled to the outer packaging 200, water infiltration paths between the support portion 321 and the outer packaging 200 may be increased.

Accordingly, the secondary battery 10 according to Embodiment 1 of the present disclosure may reduce the problem with the performance of the secondary battery 10 by reducing the amount of water infiltration.

### Embodiment 2

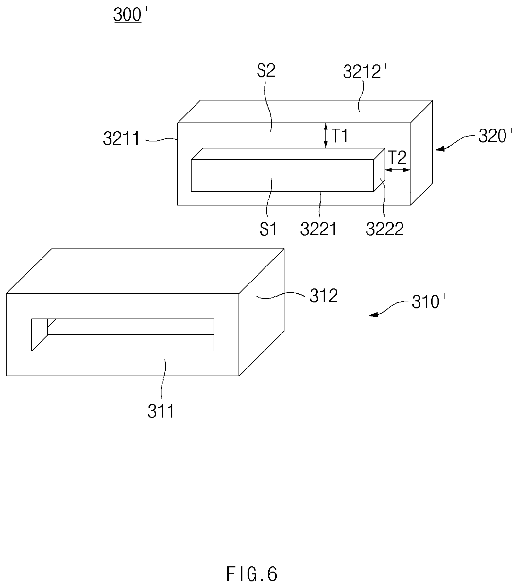

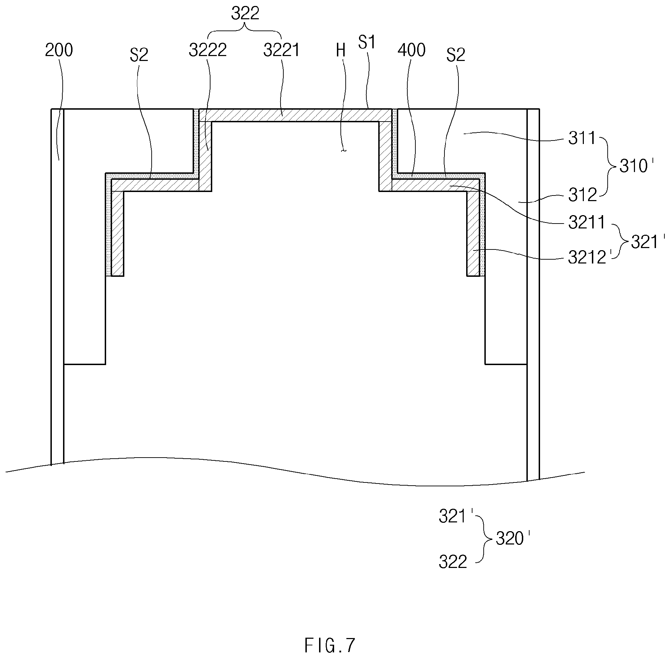

FIG. 5 is an exploded perspective view schematically showing the secondary battery 10' according to Embodiment 2 of the present disclosure, and FIG. 6 is an exploded perspective view schematically showing the cap 300' of the secondary battery 10' according to Embodiment 2 of the present disclosure. In addition, FIG. 7 is a cross-sectional view schematically showing parts of the cap 300' and the outer packaging 200' of the secondary battery 10' according to Embodiment 2 of the present disclosure.

Hereinafter, a detailed description of the same components as those of the secondary battery 10 according to Embodiment 1 of the present disclosure is omitted, and differences will be described in detail. The secondary battery 10' according to Embodiment 2 of the present disclosure may be different from the secondary battery 10 according to Embodiment 1 in the shape of the outer packaging 200', the shape of the covering portion 310', the shape of the terminal portion 320' and the method for coupling the components.

The secondary battery 10' according to Embodiment 2 of the present disclosure has the area S1 + S2 in which the terminal portion 320' covers the outer packaging opening that is equal to or greater than 90% of the area in which the cap 300' covers the outer packaging opening, in the same way as the secondary battery 10 according to Embodiment 1.

Referring to FIG. 5, the secondary battery 10' according to Embodiment 2 of the present disclosure may include the electrode assembly 100, the outer packaging 200' and the cap 300'. The outer packaging 200' of the secondary battery 10' may be configured to cover a part of the electrode assembly 100. Specifically, the outer packaging 200' may be configured to cover the cap 300' and the electrode assembly 100. More specifically, the outer packaging 200' may be coupled to the cap 300' to form an internal space, and the electrode assembly 100 may be housed in the internal space.

With regard to the shape in which one end and the other end of the outer packaging 200' meet each other, one surface of one end and one surface of the other end may be coupled in contact with each other (see FIG. 5).

Referring to FIG. 6, the second member 3212' of the support portion 321' may be formed along the periphery of the first member 3211. That is, the second member 3212' may be connected to the periphery of the first member 3211 on the basis of FIG. 6. The structural stability between the covering portion 310' and the terminal portion 320' may be improved by the shape of the second member 3212'.

As an example of a configuration for improving the coupling strength with the terminal portion 320', the covering portion 310' of the cap 300' according to Embodiment 2 of the present disclosure may include a first cover portion 311 and a second cover portion 312.

Referring to FIG. 7, the first cover portion 311 may be configured to cover the first member 3211 from the outside of the covering portion 310'. That is, the first cover portion 311 may overlap the first member 311 with respect to the direction parallel to the penetration direction of the through-hole H.

Additionally, the second cover portion 312 may extend from the first cover portion 311 in a direction toward the electrode assembly 100. Specifically, the second cover portion 312 may be disposed between the second member 3212' and the outer packaging 200'. More specifically, the second cover portion 312 may be formed along the periphery of the first cover portion 311.

A surface of the first cover portion 311 facing the first member 3211 may be coupled to one surface of the first member 3211. More specifically, the surface of the first cover portion 311 facing the contact surface S2 may be coupled to the contact surface S2. That is, the inner surface of the first cover portion 311 may be coupled to the contact surface S2.

The second cover portion 312 may be disposed between the second member 3212' and the outer packaging 200' such that one surface may be coupled to the second member 3212' of the support portion 321', and the other surface may be coupled to the outer packaging 200'. In this instance, an adhesive 400 may be applied for coupling between the second cover portion 312 and the other component. That is, the adhesive 400 may be applied to one surface and the other surface of the second cover portion 312. The second cover portion 312 may be coupled to the second member 3212' and the outer packaging 200' through the adhesive 400. Preferably, the adhesive 400 may be applied between the outer packaging 200' and the covering portion 310' to couple the outer packaging 200' to the covering portion 310', and the adhesive 400 may be applied between the covering portion 310' and the terminal portion 320' to couple the covering portion 310' to the terminal portion 320'. Here, the type and coating pattern of the adhesive 400 for coupling may vary.

The cap 300' according to Embodiment 2 of the present disclosure may have one surface of the terminal portion 320' on the same plane as one surface of the covering portion 310'. In this case, because any part of the terminal portion 320' does not protrude outward from the covering portion 310', it may be easy to place a plurality of secondary batteries 10'.

Although the present disclosure has been hereinabove described with regard to certain embodiments and drawings, the present disclosure is not limited thereto and it is obvious to persons having ordinary skill in the technical field pertaining to the present disclosure that various modifications and changes may be made thereto within the technical aspect of the present disclosure and the scope of the appended claims and their equivalents.

### [List of Reference Numerals]

| | | | |
|---|---|---|---|
| 10, 10': | Secondary battery | 100: | Electrode assembly |
| 110: | Electrode tab | 200, 200': | Outer packaging |
| 300, 300': | Cap | 310, 310': | Covering portion |
| 311: | First cover portion | 312: | Second cover portion |
| 320, 320': | Terminal portion | 321, 321': | Support portion |
| 322: | Exposure portion | 400: | Adhesive |
| 3211: | First member | 3212, 3212': | Second member |
| 3221: | Outer member | 3222: | Passage member |

## Claims

1. A secondary battery comprising:
an electrode assembly;
an outer packaging formed from a sheet such that the outer packaging has an internal space for accommodating the electrode assembly and an outer packaging opening configured to communicate the internal space with an outside; and
a cap configured to cover the outer packaging opening,
wherein the cap comprises:
a covering portion coupled to the outer packaging; and
a terminal portion disposed to cover the outer packaging opening together with the covering portion, wherein the terminal portion is exposed to each of an outside and an inside of the covering portion, and a part of the terminal portion exposed to the inside of the covering portion is electrically connected to the electrode assembly,
wherein the terminal portion comprises a material having a lower water vapor transmission rate than a material included in the covering portion, and
wherein an area in which the terminal portion covers the outer packaging opening is equal to or greater than 90% of an area in which the cap covers the outer packaging opening.

2. The secondary battery according to claim 1,
wherein the terminal portion comprises:
an exposure portion having a surface exposed to the outside of the covering portion; and
a support portion connected to the exposure portion and having a contact surface facing the covering portion, the contact surface being coupled to an inner surface of the covering portion.

3. The secondary battery according to claim 2,
wherein an area of the contact surface is equal to or greater than 30% of the area in which the terminal portion covers the outer packaging opening.

4. The secondary battery according to claim 2,
wherein the area in which the exposure portion covers the outer packaging opening is equal to or greater than 50% of the area in which the cap covers the outer packaging opening.

5. The secondary battery according to claim 2,
wherein a sum of an area in which the exposure portion covers the outer packaging opening and an area of the contact surface of the terminal portion is equal to or greater than 90% of the area in which the cap covers the outer packaging opening.

6. The secondary battery according to claim 2,
wherein the exposure portion comprises:
an outer member having a shape that conforms to a through-hole of the covering portion and is exposed to the outside of the covering portion; and
a passage member extending from a periphery of the outer member in an inward direction of the covering portion and passing through the through-hole.

7. The secondary battery according to claim 6,
wherein the support portion comprises:
a first member connected perpendicularly to the passage member, and
wherein the contact surface is included in the first member.

8. The secondary battery according to claim 7,
wherein a width of the first member is equal to or less than a width of the inner surface of the covering portion.

9. The secondary battery according to claim 7,
wherein the covering portion includes a resin material having a heat activated adhesive property,
wherein the first member includes a metal material, and
wherein the inner surface of the covering portion and the first member are coupled to each other by heat and pressure.

10. The secondary battery according to claim 7,
wherein the inner surface of the covering portion and the first member are coupled to each other by an adhesive applied between the covering portion and the first member.

11. The secondary battery according to claim 7,
wherein the support portion further comprises:
a second member extending from the first member toward the electrode assembly and electrically connected to the electrode assembly.

12. The secondary battery according to claim 11,
wherein the second member is coupled to an inner surface of the outer packaging.

13. The secondary battery according to claim 11,
wherein the covering portion comprises:
a first cover portion configured to cover the first member from the outside of the covering portion; and
a second cover portion disposed between the second member and the outer packaging, coupled to the outer packaging, and extending from the first cover portion toward the electrode assembly.

14. The secondary battery according to claim 13,
wherein a surface of the first cover portion facing the first member is coupled to the contact surface.
